(19) Europäisches Patentamt
European Patent Office
Office européen des brevets

(11) **EP 1 898 348 A1**

(12) **EUROPEAN PATENT APPLICATION**

(43) Date of publication:
**12.03.2008 Bulletin 2008/11**

(51) Int Cl.:
***G06Q 10/00*** *(2006.01)*

(21) Application number: **07113697.2**

(22) Date of filing: **02.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.08.2006 JP 2006225911**

(71) Applicant: **Ricoh Company, Ltd.**
**Tokyo 143-8555 (JP)**

(72) Inventors:
• **Kunichika, Yohei**
**Tokyo (JP)**
• **Matsui, Yoshiro**
**Saitama (JP)**

(74) Representative: **Schwabe - Sandmair - Marx**
**Stuntzstrasse 16**
**81677 München (DE)**

(54) **Task search apparatus, task search method, and storage medium**

(57)    A disclosed apparatus for searching a collection of tasks for a similar task similar to a focus task includes a topology storing unit configured to store information on a topology of the tasks, and a connected task search unit configured to extract similar connected tasks similar to a focus-task-connected task connected to the focus task from similar-task-candidate-connected tasks connected to similar task candidates that are candidates for the similar task.

FIG.1

## Description

## BACKGROUND OF THE INVENTION

1. Field of the Invention

The present invention generally relates to a task search apparatus, a task search method, and a storage medium containing a task search program.

2. Description of the Related Art

Project management systems are used to help users to manage their projects. In a typical project management system, projects are managed in units called "tasks" registered by users. With such a project management system, users can manage schedules and processes of registered tasks and resulting documents. Meanwhile, when a user carries out a task, it is often useful to have information on similar previous tasks. To obtain such information, it is necessary to use a technology that enables retrieving information on previous tasks similar to a current task from a database.

During or at the end of a task, various documents are normally created. If such documents created in previous tasks are managed by a database, it is possible to find a task similar to a current task based on the documents in the database.

As an example of a document retrieval technology, Japanese Patent Application Publication No. 2002-207726 (patent document 1) discloses a document management apparatus. The disclosed document management apparatus enables storing history information on document manipulation and retrieving documents similar to a document to be manipulated based on the history information.

[Patent document 1] Japanese Patent Application Publication No. 2002-207726

The document management apparatus disclosed in patent document 1 can retrieve similar documents when manipulation history information of both a current document and previous documents has already been recorded. However, the disclosed apparatus cannot retrieve documents similar to a new document whose manipulation history information has not been recorded yet.

When a task has just been started, it is often the case that no document relating to the task has been created. In such a case, it is not possible to retrieve information on previous tasks that might be useful to carry out a new task with the technology disclosed in patent document 1.

## SUMMARY OF THE INVENTION

The present invention provides a task search apparatus, a task search method, and a storage medium containing a task search program that substantially obviate one or more problems caused by the limitations and disadvantages of the related art.

Embodiments of the present invention provide a task search apparatus, a task search method, and a storage medium containing a task search program that make it possible to easily retrieve tasks similar to a current or new task from a database containing information regarding previous tasks.

According to an embodiment of the present invention, an apparatus for searching a collection of tasks for a similar task similar to a focus task includes a topology storing unit configured to store information on a topology of the tasks; and a connected task search unit configured to extract similar connected tasks similar to a focus-task-connected task connected to the focus task from similar-task-candidate-connected tasks connected to similar task candidates that are candidates for the similar task.

According to another embodiment of the present invention, a method of searching a collection of tasks for a similar task similar to a focus task includes a topology storing step of storing information on a topology of the tasks; and a connected task search step of extracting similar connected tasks similar to a focus-task-connected task connected to the focus task from similar-task-candidate-connected tasks connected to similar task candidates that are candidates for the similar task.

## BRIEF DESCRIPTION OF THE DRAWINGS

FIG. 1 is a drawing illustrating an exemplary functional configuration of a task search apparatus 100 according to an embodiment of the present invention;

FIGs. 2A through 2D are tables showing exemplary information stored in a database unit 90;

FIG. 3 is a drawing of an exemplary screen, which is generated by a screen generating unit 80, displaying a current task being carried out by a user;

FIG. 4 is a sequence chart showing an exemplary process in the task search apparatus 100;

FIG. 5 is a flowchart showing an exemplary process of extracting similar tasks by a task analysis unit 40;

FIG. 6 is a flowchart showing an exemplary process of refining a list of extracted similar tasks based on degrees of similarity between a focus-task-connected task and similar-task-candidate-connected tasks;

FIG. 7 is a drawing of an exemplary screen displaying a list of similar tasks extracted by the task search apparatus 100;

FIG. 8 is a drawing of an exemplary screen displaying a similar task;

FIG. 9 is a flowchart showing an exemplary process performed by the screen generating unit 80;

FIG. 10 is a flowchart showing an exemplary process of registering outputs and reference documents of a task in the task search apparatus 100; and
FIG. 11 is a flowchart showing an exemplary process performed by an access right verification unit 91.

## DESCRIPTION OF THE PREFERRED EMBODIMENTS

Prior to the descriptions of preferred embodiments of the present invention, terms regarding tasks used in the embodiments are described. A focus task is a task to be carried out by a user. Tasks similar to a focus task are retrieved to efficiently carry out the focus task. During a process of searching for similar tasks, a task connected to a focus task may also be called a focus task. A focus-task-connected task is a task connected to a focus task. A similar task candidate is a candidate for a similar task. A similar task candidate may be a task having an attribute similar to that of a focus task. A similar-task-candidate-connected task is a task connected to a similar task candidate. "Connected" in embodiments of the present invention means either two tasks are connected via other tasks or two tasks are directly connected. For example, when the topology of tasks has a tree structure, a parent task of a focus task, a parent task of the parent task, and a task having the same parent task as that of the focus task are all connected to the focus task.

Preferred embodiments of the present invention are described below with reference to the accompanying drawings.

<First Embodiment>

(Functional Configuration of Task Search Apparatus)

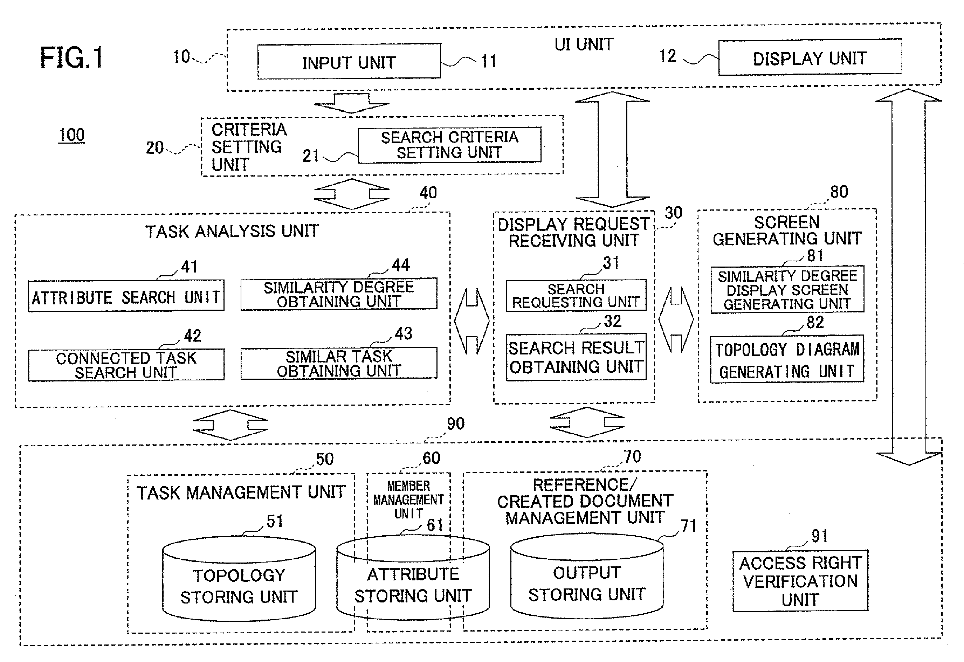

FIG. 1 is a drawing illustrating an exemplary functional configuration of a task search apparatus 100 according to an embodiment of the present invention. In the task search apparatus 100 shown in FIG. 1, a task analysis unit 40 searches for similar tasks based on a user request entered via a user interface unit 10 (hereafter called a UI unit 10) including an input unit 11 and a display unit 12, and the search results are displayed on the display unit 12.

The task search apparatus 100 includes the UI unit 10, a criteria setting unit 20, a display request receiving unit 30, the task analysis unit 40, a screen generating unit 80, and a database unit 90. The functional configuration of the task search apparatus 100 is not limited to that described above.

The UI unit 10 displays screens that the task search apparatus 100 outputs and is used by the user to enter requests into the task search apparatus 100. The UI unit 10 includes the input unit 11 and the display unit 12. The input unit 11 is used by the user to enter requests into the task search apparatus 100. The display unit 12 displays screens that the task search apparatus 100 outputs. The UI unit 10 may be provided either as a component of the task search apparatus 100 or as a client device connected to the task search apparatus 100.

The criteria setting unit 20 specifies search criteria used to search for tasks based on a user request entered via the UI unit 10. The criteria setting unit 20 includes a search criteria setting unit 21. The search criteria setting unit 21 specifies search criteria based on a user request entered via the input unit 11 and retains the specified search criteria.

Search criteria include, for example, a parameter used to search for similar tasks or similar connected tasks. A parameter may be an objective ID of a task, the number of members, a member name, or the role of a member. Search criteria may also include the number of similar tasks to be displayed on the display unit 12 when multiple similar tasks are found.

Search criteria may further include a distance in a topology between a focus task and a focus-task-connected task. The distance in a topology indicates, for example, the number of tasks present between a focus task and a focus-task-connected task.

The display request receiving unit 30, for example, receives a display request to display similar tasks from the UI unit 10, sends the task analysis unit 40 a search request to search for similar tasks, and sends the screen generating unit 80 a screen generation request to generate a screen displaying similar tasks found in the search. The display request receiving unit 30 includes a search requesting unit 31 and a search result obtaining unit 32.

The search request unit 31 sends the task analysis unit 40 a search request to search for similar tasks based on a display request from the UI unit 10. The search result obtaining unit 32 obtains information on similar tasks found by the task analysis unit 40 or information on a task requested to be displayed by the UI unit 10 from the database unit 90 and sends the information to the screen generating unit 80.

The task analysis unit 40 searches for tasks similar to a focus task based on a request from the display request receiving unit 30. When performing a search, the task analysis unit 40 obtains search criteria from the criteria setting unit 20. The task analysis unit 40 includes an attribute search unit 41, a connected task search unit 42, a similar task obtaining unit 43, and a similarity degree obtaining unit 44.

The attribute search unit 41 searches for tasks having attributes that are the same as or similar to an attribute of a focus task. The attribute search unit 41 obtains information on attributes of tasks from the database unit 90. Tasks found by the attribute search unit 41 are sent to the connected task search unit 42 as similar task candidates.

The connected task search unit 42 extracts similar connected tasks similar to a focus-task-connected task connected to the focus task from similar-task-candidate-connected tasks connected to the similar task candidates. The connected task search unit 42 obtains a focus-task-connected task and similar-task-candidate-connected tasks based on information on the topology of tasks and extracts similar connected tasks similar to the focus-task-connected task from the similar-task-candidate-connected tasks. It is possible to obtain accurate degrees of similarity between a focus task and similar task candidates by making the positional relationship in a topology between similar-task-candidate-connected tasks and similar task candidates substantially match the positional relationship in the topology between a focus-task-connected task and a focus task.

When the topology of tasks has a tree structure, a task that is closer to the root of the tree structure than a focus task may be used as the focus-task-connected task. A task closer to the root normally has more outputs and information than a focus task that is being or to be carried out. Therefore using a focus-task-connected task closer to the root makes it possible to improve the accuracy of a search. Also, in this case, tasks closer to the root than similar task candidates may be used as similar-task-candidate-connected tasks. Since the number of tasks closer to the root is smaller than the number of tasks closer to the bottom of the tree, using tasks closer to the root as similar-task-candidate-connected tasks makes it possible to reduce the number of tasks to be compared in a search.

When the topology of tasks has a structure other than a tree structure, a task that is older than a focus task may be used as the focus-task-connected task. Since an older task normally has more outputs and information than a focus task, using a focus-task-connected task older than a focus task makes it possible to improve the accuracy of a search. An older task in this case indicates a task having registration times, such as initial registration time, progress registration time, and result registration time, one or more of which are earlier than those of a focus task.

The similar task obtaining unit 43 extracts similar tasks similar to a focus task from the similar task candidates based on information from the attribute search unit 41 or the connected task search unit 42. The similar task obtaining unit 43 extracts one or more similar tasks from the similar task candidates which similar tasks (or similar task candidates) are connected to similar-task-candidate-connected tasks (or similar connected tasks) that are similar to a focus-task-connected task. The number of similar tasks extracted by the similar task obtaining unit 43 is not limited to a specific value. The similar task obtaining unit 43 may also be configured to extract similar task candidates as similar tasks which similar task candidates have degrees of similarity greater than a predetermined value based on information from the similarity degree obtaining unit 44.

The similarity degree obtaining unit 44 obtains degrees of similarity between a focus task and similar task candidates. The similarity degree obtaining unit 44, for example, obtains degrees of similarity by comparing a focus task and similar task candidates. The similarity degree obtaining unit 44 may also be configured to obtain degrees of similarity (hereafter called connected-task similarity degrees) by comparing a focus-task-connected task and similar-task-candidate-connected tasks and use them as degrees of similarity (hereafter called task similarity degrees) between a focus task and similar task candidates.

A degree of similarity between tasks may be obtained, for example, by comparing attributes of the tasks or outputs or reference documents of the tasks. Exemplary attributes of a task include an objective of the task, members who carry out the task, and the role of each member. When outputs of tasks are documents, the degree of similarity between the documents may be obtained by parsing the documents and then comparing them based on, for example, the number of matching or similar words or the distances between two or more matching words. When outputs of tasks are images, the degree of similarity between the images may be obtained, for example, by comparing the colors or shapes of components of the images.

The screen generating unit 80 generates screens to be displayed on the display unit 12 based on requests from the display request receiving unit 30 and information on tasks. The screen generating unit 80 includes a similarity degree display screen generating unit 81 and a topology diagram generating unit 82. The similarity degree display screen generating unit 81 generates a screen that displays one or more similar tasks together with the degrees of similarity between the focus task and the similar tasks or the degrees of similarity between the focus-task-connected task and the similar-task-candidate-connected tasks. When there are two or more similar tasks, the similarity degree display screen generating unit 81 displays the similar tasks, for example, in the order of the degrees of similarity between the focus task and the similar tasks or the degrees of similarity between the focus-task-connected task and the similar-task-candidate-connected tasks.

The topology diagram generating unit 82 generates a topology diagram visualizing the topology of tasks based on topology information obtained via the display request receiving unit 30. The topology diagram generating unit 82 may be configured to generate a topology diagram visualizing the topology of tasks such that a focus task, a focus-task-connected task, a similar task(s), and similar-task-candidate-connected tasks are highlighted and distinguishable from other tasks.

The database unit 90 stores and manages information on tasks. The database unit 90 includes a task management unit 50, a member management unit 60, and a reference/created document management unit 70. The database unit 90 may also include an access right verification unit 91.

The task management unit 50 is configured to store information on topologies of tasks, objective IDs indicating objectives of tasks, and/or output type IDs indicating the types of outputs or reference documents of tasks, and includes a topology storing unit 51 and a part of an attribute storing unit 61. The member management unit 60 is configured to store information on members involved in tasks and roles of the members in the corresponding tasks and includes a part of the attribute storing unit 61. The reference/created document management unit 70 is configured to store reference documents or outputs (such as documents created in tasks) of tasks and to store information on access rights to the outputs where applicable.

The task management unit 50 includes the topology storing unit 51, the member management unit 60 includes the attribute storing unit 61, and the reference/ created document management unit 70 includes an output storing unit 71. A part of the functions of the attribute storing unit 61 may be included in the task management unit 50 or the reference/created document management unit 70.

The topology storing unit 51 stores information on topologies of tasks. When requested by the task analysis unit 40, the topology storing unit 51 returns, for example, topological information on tasks, objective IDs of tasks, and/or output type IDs of outputs of tasks.

(Exemplary Information Stored in Database Unit 90)

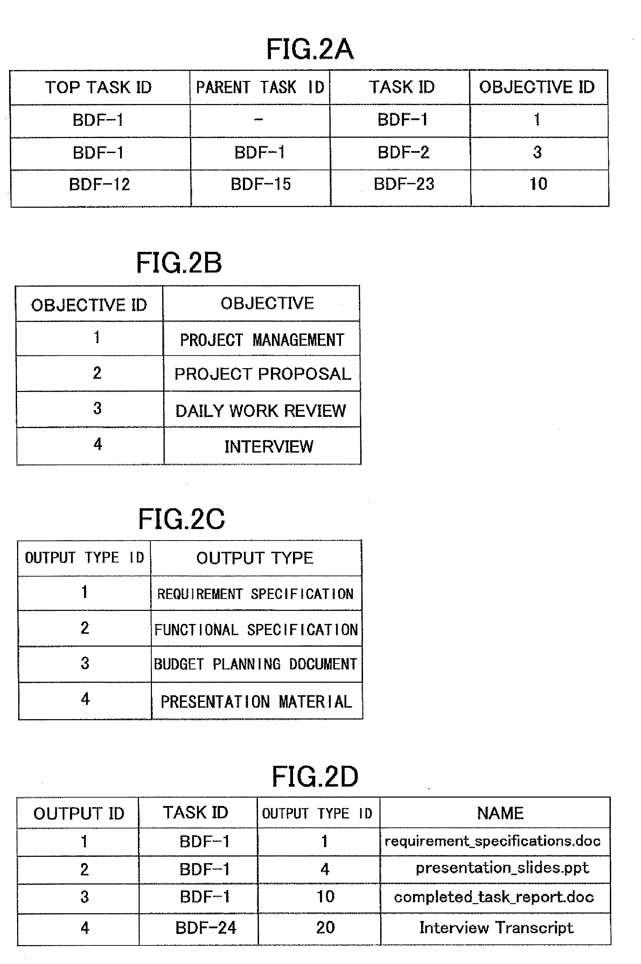

FIGs. 2A through 2D are tables showing exemplary information stored in the database unit 90. FIG. 2A shows exemplary information stored in the topology storing unit 51. FIG. 2A shows information on topologies of tasks which topologies have tree structures. Topological information for each task includes an ID of a top task that is the root of the corresponding task tree, an ID of a parent task just above (one task closer to the root than) the task, an ID of the task, and an objective ID of the task.

Referring back to FIG. 1, the attribute storing unit 61 stores objective IDs indicating objectives of tasks, output type IDs indicating types of outputs of tasks, information on members involved in tasks, roles of members in corresponding tasks, and/or information on access rights in the database unit 90. The attribute storing unit 61 returns information upon request from the task analysis unit 40.

FIGs. 2B and 2C show exemplary information stored in the attribute storing unit 61. FIG. 2B shows an exemplary table defining objective IDs that indicate objectives of tasks. The exemplary table shown in FIG. 2B defines four objective IDs. Objective IDs defined as shown in FIG. 2B are attached to the topological information of tasks as exemplified in FIG. 2A (fourth column of the table). FIG. 2C shows an exemplary table defining output type IDs that indicate types of outputs of tasks. The exemplary table shown in FIG. 2C defines four output type IDs. Output type IDs defined as shown in FIG. 2C are used in a task output table described later.

The attribute storing unit 61 may also store information on access rights to tasks. In this case, whether to display information on a requested task is determined based on the access right information.

Referring back to FIG. 1, the output storing unit 71 stores outputs of tasks, such as documents and images, or reference documents input while tasks are carried out. The output storing unit 71 returns outputs or reference documents of tasks upon request from the task analysis unit 40.

FIG. 2D shows an exemplary table showing outputs of tasks stored in the output storing unit 71. The exemplary table shown in FIG. 2D includes information on four outputs. Information on each of the four outputs includes an output ID, a task ID, an output type ID, and an output name. Output IDs are used to manage outputs in the output storing unit 71. Task IDs are IDs of tasks corresponding to the outputs and are associated with information on tasks which information is stored in the attribute storing unit 61. Output type IDs are those defined in the exemplary table shown in FIG. 2C. When a request from the task analysis unit 40 is based on an output type, the output storing unit 71 returns information on outputs of tasks which outputs correspond to the output type. Output names are, for example, file names of outputs stored as electronic files. The output storing unit 71 assigns an output ID to each output.

The attribute storing unit 71 may also store information on access rights to outputs. In this case, whether to display requested outputs is determined based on the access right information.

Referring to FIG. 1 once again, when a display request for information on a task or an output of a task is sent from the display request receiving unit 30, the access right verification unit 91 obtains corresponding access right information from the attribute storing unit 61 or the output storing unit 71 and compares the access right of the user who entered the original request with the obtained access right information. When the user has an access right to the requested information or output, the access right verification unit 91 permits the request. When the user has no access right to the requested information or output, the access right verification unit 91 rejects the request.

When rejecting a request to display information on or an output of a task, the access right verification unit 91 further determines whether to permit display of information on members involved in the task based on the access right of the user and the obtained access right information.

(Exemplary Screen Generated by Screen Generating Unit 80)

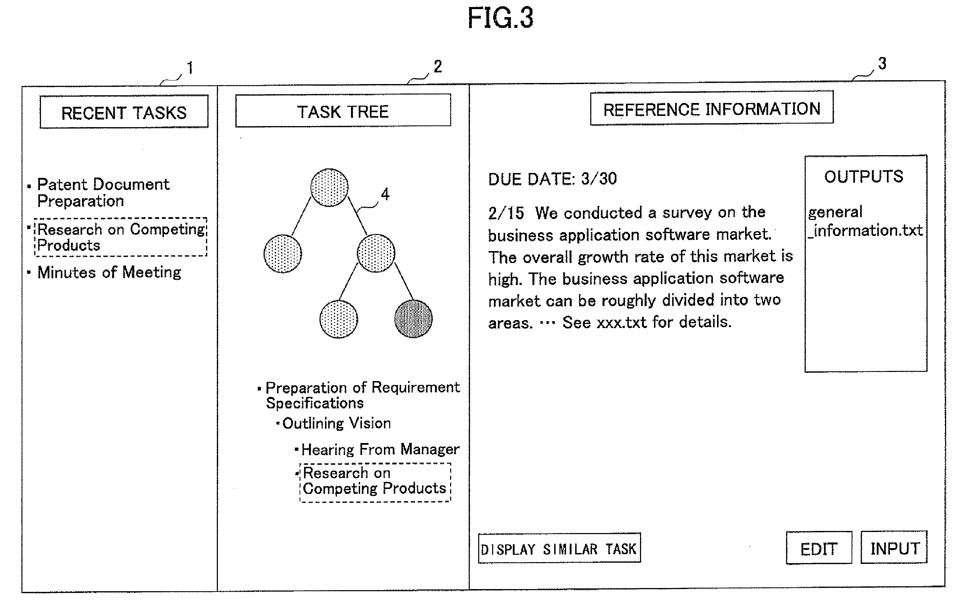

FIG. 3 is a drawing illustrating an exemplary screen, which is generated by a screen generating unit 80, displaying a current task being carried out by a user. In a pane 1 shown in FIG. 3, a list of ongoing tasks of a user is displayed and "Research on Competing Products" is selected among the ongoing tasks. In a pane 2, a topology 4 of tasks including the "Research on Competing Products" task is displayed. In the example shown in FIG.

3, the topology 4 has a tree structure and is displayed under a label "Task Tree" and the "Research on Competing Products" task is differentiated from other tasks in the topology 4 using a different shading pattern.

A pane 3 is used to display or edit information such as a progress report of a task. In this example, the pane 3 shows a progress report and a link to an output and includes a "Display Similar Task" button, an "Edit" button, and an "Input" button. When the "Display Similar Task" button is pressed, a search for similar tasks in the task search apparatus 100 is started.

(Exemplary Process in Task Search Apparatus 100)

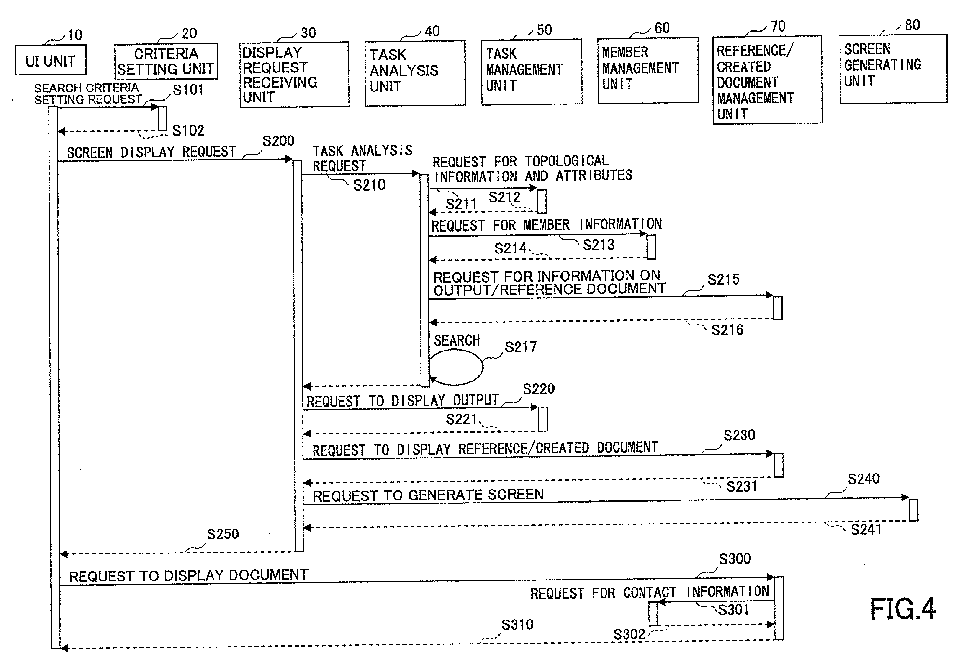

FIG. 4 is a sequence chart showing an exemplary process in the task search apparatus 100. As shown in FIG. 4, when receiving a request to display similar tasks from a user, the task search apparatus 100 retrieves similar tasks from stored tasks based on the request and displays the retrieved similar tasks.

In step S101 of FIG. 4, the UI unit 10 sends a search criteria setting request to the criteria setting unit 20 based on search criteria entered by a user. The search criteria setting request includes a request to set search criteria as well as the search criteria themselves. In step S102 following step S101, the criteria setting unit 20 sends a response to the search criteria setting request to the UI unit 10.

In step S200 following or sometime after step S102, the UI unit 10 sends a screen display request to display similar tasks to the display request receiving unit 30 in response to a similar task display request entered by a user. The similar task display request is entered, for example, by pressing the "Display Similar Task" button in the pane 3 shown in FIG. 3.

In step S210 following step S200, the display request receiving unit 30 sends a task analysis request to the task analysis unit 40. The task analysis request may include, for example, information on the current task displayed on the exemplary screen shown in FIG. 3. Examples of information on the current task include the task ID, output IDs of outputs or reference documents of the current task, information on members of the current task, and the roles of members in the current task.

In step S211 following step S210, the task analysis unit 40 sends the task management unit 50 a request to send topological information and attributes of tasks. In step S212 following step S211, the task management unit 50 returns topological information and attributes of tasks to the task analysis unit 40.

The number of tasks whose topological information and attributes are to be returned is determined by a parameter in the search criteria. For example, a condition "tasks that are connected to the current task via no more than three tasks" may be used as the parameter in the search criteria. Or, the number of tasks may be specified simply by a number.

In step S213 following step S212, the task analysis unit 40 sends the member management unit 60 a request to send information on the members of the tasks whose topological information and attributes have been obtained in step S212. The request for member information may include task IDs of the tasks. In step S214 following step S213, the member management unit 60 returns information on the members of the tasks to the task analysis unit 40. The member information obtained in step S214 includes, for example, member names and/or the roles of the members in the tasks.

In step S215 following step S214, the task analysis unit 40 sends the reference/created document management unit 70 a request to send information on outputs or reference documents of the tasks whose topological information and attributes have been obtained in step S212. In step S216 following step S215, the reference/created document management unit 70 sends information on the outputs or reference documents to the task analysis unit 40.

Through steps S211 to S216 described above, information necessary to search for similar tasks is sent from the database unit 90 to the task analysis unit 40. In step S217 following step S216, the task analysis unit 40 searches for similar tasks based on the obtained information on tasks.

In the exemplary process shown in FIG. 4, the task analysis unit 40 searches for similar tasks after receiving topology information, attributes, member information, and information on outputs or reference documents of tasks. However, the task search method according to embodiments of the present invention is not limited to that shown in FIG. 4. For example, the task analysis unit 40 may be configured to obtain attributes of tasks, to search for tasks having degrees of similarity above a certain level, and to obtain member information of the tasks found in the search.

(Exemplary Process of Extracting Similar Tasks by Task Evaluation Unit 40)

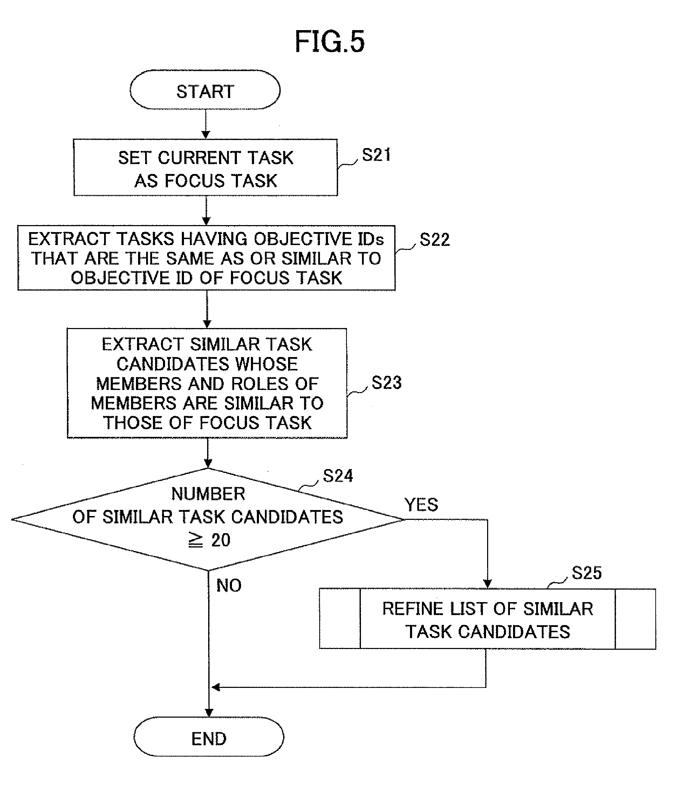

FIG. 5 is a flowchart showing an exemplary process of extracting similar tasks by the task evaluation unit 40 in step S217 shown in FIG. 4. In the exemplary process shown in FIG. 5, the constituent units of the task analysis unit 40 extract similar tasks based on the information obtained through steps S211 to S216.

In step S21, the task analysis unit 40 sets a current task being carried out by the user as a focus task and obtains information on the focus task. In step S22 following step S21, the attribute search unit 41 extracts tasks having objective IDs that are the same as or similar to the objective ID of the focus task based on the attribute information of tasks obtained in step S212.

In step S23 following step S22, the attribute search unit 41 extracts similar task candidates, whose members and roles of the members are similar to those of the focus task, based on the member information obtained in step S214 from the tasks extracted in step S22.

In step S24 following step S23, the task analysis unit 40 determines whether the number of similar task candidates extracted in step S23 is equal to or larger than a threshold number. The threshold number may be set via the criteria setting unit 20, for example, in step S101. Or, the threshold number may be determined so as to match the number of similar tasks displayable on one search result screen output by the task search apparatus 100. In the exemplary process shown in FIG. 5, the threshold number is set at 20.

When the number of extracted similar task candidates is smaller than the threshold number in step S24, the extracted similar task candidates are regarded as similar tasks and the exemplary process is terminated. Parameters used in steps S22 and S23 to extract similar task candidates are not limited to objective IDs and member information, but other attributes of tasks or information on outputs of tasks may also be used.

When the number of extracted similar task candidates is equal to or larger than the threshold number in step S24, the exemplary process branches to step S25.

In step S25, the list of extracted similar task candidates is refined based on degrees of similarity between a focus-task-connected task and similar-task-candidate-connected tasks. In this embodiment, since the topology of tasks has a tree structure, parent tasks are used as the focus-task-connected task and the similar-task-candidate-connected tasks.

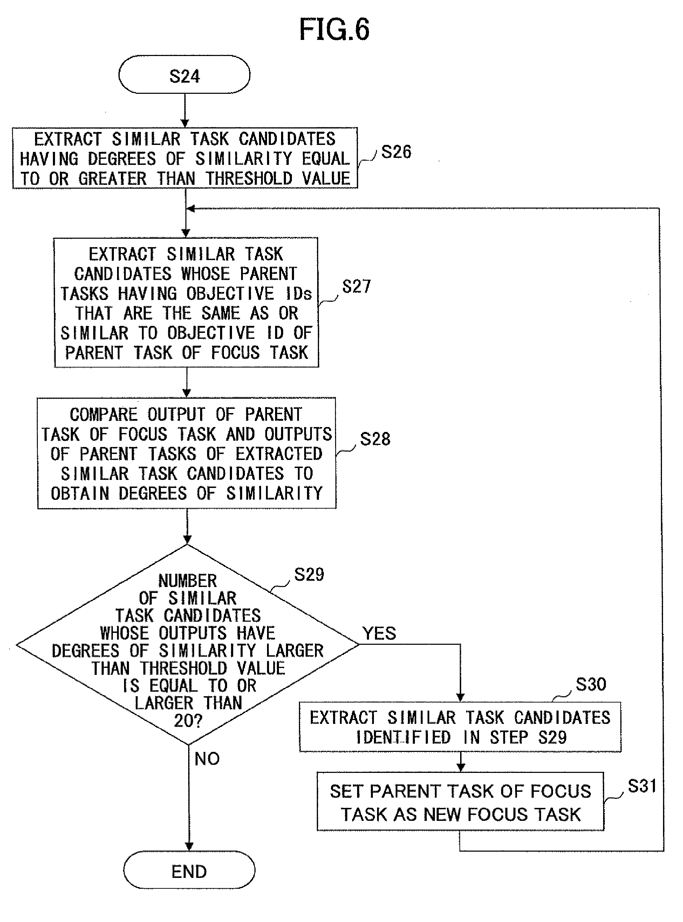

FIG. 6 is a flowchart showing an exemplary process of refining the list of extracted similar tasks in step S25 of FIG. 5 based on degrees of similarity between the focus-task-connected task and the similar-task-candidate-connected tasks. In step S26 shown in FIG. 6, the task evaluation unit 40 extracts similar task candidates having degrees of similarity equal to or greater than a threshold value.

In step S27 following step S26, the connected task search unit 42 compares the parent task of the focus task and the parent tasks of the similar task candidates extracted in step S26 and thereby extracts similar task candidates whose parent tasks have objective IDs that are the same as or similar to the objective ID of the parent task of the focus task. In step S28 following step S27, the similarity degree obtaining unit 44 compares an output of the parent task of the focus task and outputs of the parent tasks of the similar task candidates extracted in step S27 and thereby obtains degrees of similarity between the outputs.

In step S29 following step S28, the task analysis unit 40 determines the number of similar task candidates whose outputs have degrees of similarity (obtained in step S28) equal to or larger than a threshold value and then determines whether the number is equal to or larger than a threshold number. The threshold number may be set via the criteria setting unit 20, for example, in step S101. The threshold number may be the same as that used in step S24. Or, the threshold number may be determined so as to match the number of similar tasks displayable on one search result screen output by the task search apparatus 100. In the exemplary process shown in FIG. 6, the threshold number is set at 20. When the number of similar task candidates is equal to or larger than the threshold number, the exemplary process branches to step S30. Otherwise, the exemplary process is terminated.

In step S30 following step S29, the task analysis unit 40 extracts the similar task candidates whose outputs have been determined in step S29 to have degrees of similarity equal to or larger than the threshold value. In step S31 following step S30, the task analysis unit 40 sets the parent task of the focus task used in previous steps S27 through S30 as a new focus task and returns to step S27.

In step S27 following step S31, the connected task search unit 42 compares the parent task of the new focus task and the parent tasks of the similar task candidates extracted in step S30. The rest of the step S27 and the subsequent steps S28 through S31 are substantially the same as those described above.

Thus, similar tasks similar to the focus task set in step S21 are extracted through the process shown in FIG. 6.

(Exemplary Screen Displaying List of Similar Tasks Extracted)

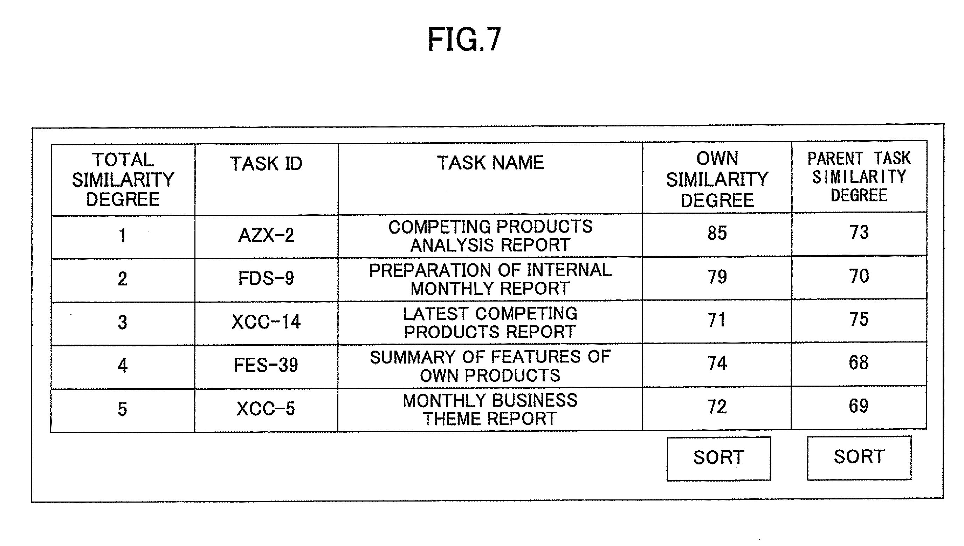

FIG. 7 is a drawing of an exemplary screen displaying a list of similar tasks extracted by the task search apparatus 100 through the processes shown in FIGs. 4 through 6. The exemplary screen is generated by the similarity degree display screen generating unit 81 of the screen generating unit 80. In the exemplary screen of FIG. 7, five similar tasks are listed in descending order of "total similarity degrees". Information items displayed in FIG. 7 for each similar task include an "own similarity degree" that is a degree of similarity between a focus task and a similar task obtained without taking into account similarity of connected tasks and a "parent task similarity degree" that is a degree of similarity between parent tasks of a focus task and a similar task.

A "total similarity degree" is a degree of similarity between a focus task and a similar task and is obtained based on the "own similarity degree" and "connected task similarity degrees" including the "parent task similarity degree". A "total similarity degree" may be obtained, for example, by the following formula (1):

$$S = \Sigma S(n) \cdot (1/L)^n \quad \ldots\ldots\ldots \quad (1)$$

In the above formula (1):

S(n) indicates an "own similarity degree" when n=0 and indicates a "connected task similarity degree" when n=1;

n indicates the number of tasks between a focus task and a focus-task-connected task in a topology;

L indicates a constant, for example, 2; and

$\Sigma$ indicates summation of a series when n equals 0 to a predetermined value.

The exemplary screen shown in FIG. 7 also includes "Sort" buttons under the "own similarity degree" and the "parent task similarity degree", respectively. Pressing one of the "Sort" buttons changes the display order of similar tasks to ascending/descending order of "own similarity degrees" or to ascending/descending order of "parent task similarity degrees".

In the embodiments shown in FIGs. 5 through 7, similar tasks are extracted based on a parent task that is connected directly to a focus task and is closer to the root in a topology than the focus task. However, tasks other than a parent task may be used for this purpose. For example, when the topology of tasks has a tree structure, similar tasks may be extracted based on a "sibling task" that is connected directly to a focus task and is further from the root in a topology than the focus task.

(Exemplary Screen Displaying Similar Task)

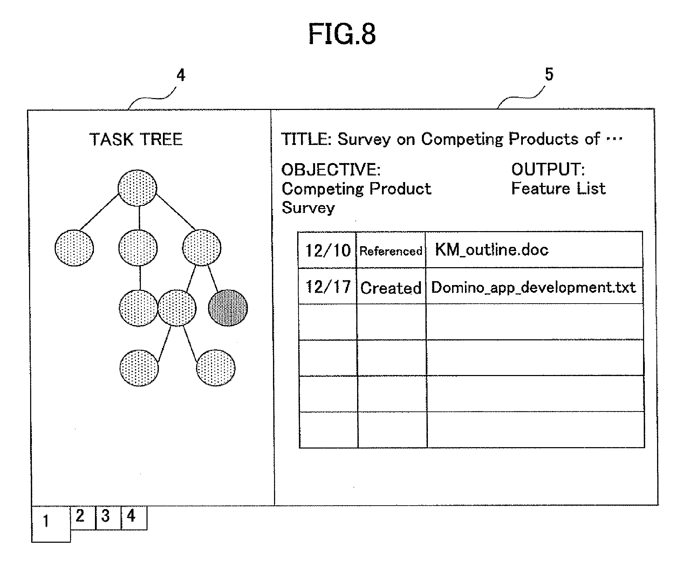

FIG. 8 is a drawing of an exemplary screen displaying a similar task selected, for example, from the list of similar tasks shown in FIG. 7. In FIG. 8, a diagram representing the topology of tasks is displayed in a pane 4 and the similar task currently displayed is highlighted and thereby differentiated from other tasks in the topology diagram.

In a pane 5 shown in FIG. 8, contents of the similar task are displayed. In this example, the title and objective of the similar task and a list of outputs or reference documents of the similar task are displayed in the pane 5. The list of outputs or reference documents of the similar task may be formed as links to the corresponding files.

The exemplary screen shown in FIG. 8 also includes tabs under the panes 4 and 5. Selecting one of the tabs displays a corresponding similar task.

(Exemplary Process Performed by Screen Generating Unit 80)

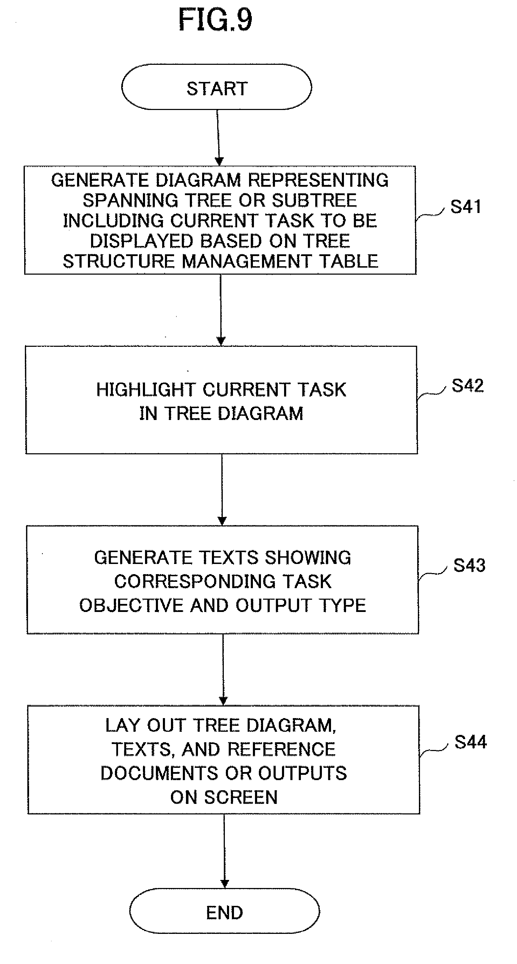

FIG. 9 is a flowchart showing an exemplary process performed by the screen generating unit 80. The screen generating unit 80 generates screens such as a current task screen as shown in FIG. 3 and a similar task screen as shown in FIG. 8.

In step S41 shown in FIG. 9, the topology diagram generating unit 82 generates a diagram representing a spanning tree or a subtree including a current task to be displayed based on a tree structure management table (for example, as shown in FIG. 2A) obtained from the topology storing unit 51. In step S42 following step S41, the topology diagram generating unit 82 highlights the current task by, for example, changing the color of the current task from other tasks in the spanning tree or the subtree generated in step S41. Highlighting a current task may be performed not only by changing the color of the current task but also by any other method as long as the current task is differentiated from other tasks.

In step S43 following step S42, the screen generating unit 80 generates texts showing the corresponding task objective and output type obtained from an objective ID management table and an output type ID management table (for example, as shown in FIGs. 2B and 2C) in the attribute storing unit 61 based on the objective ID and the output type ID of the current task.

In step S44 following step S43, the screen generating unit 80 lays out the spanning tree or subtree diagram and the texts showing the task objective and output type generated in steps S41 through S43 and thereby generates a screen displaying the current task. The screen may also include the names of outputs or reference documents of the current task and links to the corresponding files.

(Exemplary Process of Registering Outputs and Reference Documents)

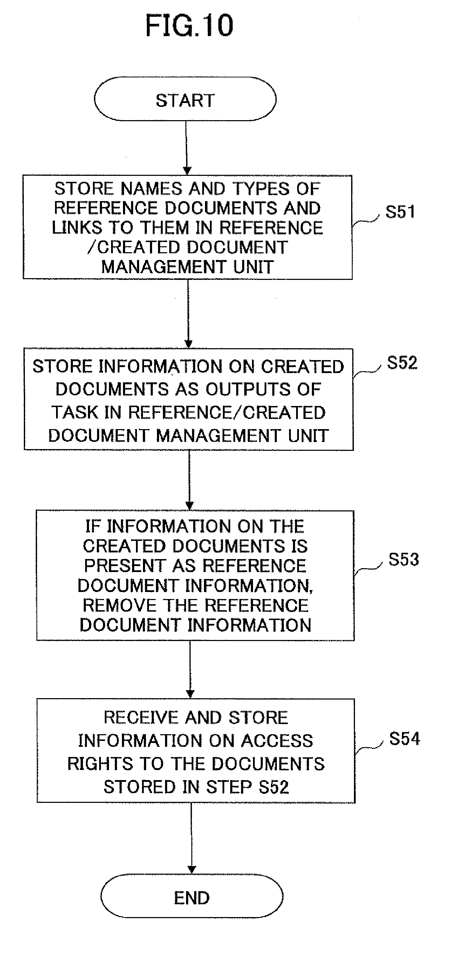

FIG. 10 is a flowchart showing an exemplary process of registering outputs and reference documents of a task in the task search apparatus 100. The exemplary process shown in FIG. 10 includes steps of registering reference documents, registering outputs, and setting access rights.

In step S51 shown in FIG. 10, the database unit 90 stores names and types of documents, for example, edited or input by the user and links to the documents in the reference/created document management unit 70 as reference document information.

In step S52 following or sometime after step S51, the database unit 90 stores documents created by the user as outputs of the corresponding task in the reference/created document management unit 70 according to a user request entered via the input unit 11.

In step S53 following step S52, if information on the created documents is present in the reference/created document management unit 70 as reference document information, the reference/created document management unit 80 removes the reference document information from itself.

In step S54 following step S53, the attribute storing unit 61 or the output storing unit 71 of the database unit 90 receives and stores information on access rights to the documents registered in step S52 which access right information is entered by the user via the input unit 11.

Thus, in steps S51 through S54, the database unit 90 stores documents created or manipulated by the user as outputs or reference documents of a task.

(Exemplary Process Performed by Access Right Verification Unit 91)

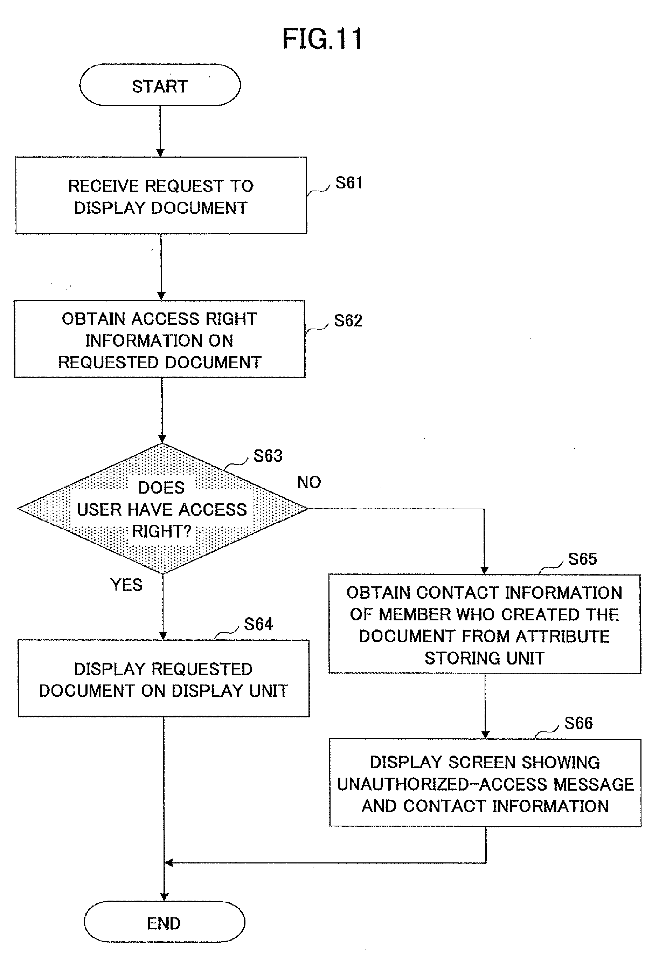

FIG. 11 is a flowchart showing an exemplary process performed by the access right verification unit 91. In the exemplary process shown in FIG. 11, when a user enters a request via the input unit 11 to display a document, the access right verification unit 91 verifies the access right of the user based on the access right information of the document and performs subsequent steps according to the result of verification.

In step S61 shown in FIG. 11, the input unit 11 receives a request from a user to display a document. In step S62, the access right verification unit 91 obtains information such as the name of and the link to the requested document via the display request receiving unit 30 or directly from the UI unit 10, and then obtains access right information of the document from the attribute storing unit 61 or the output storing unit 71.

In step S63 following step S62, the access right verification unit 91 determines whether the user has a right to access the requested document based on information on the user and the access right information obtained in step S62. If the user has an access right to the document, the process proceeds to step S64. If the user has no access right to the document, the process branches to step S65.

In step S64 following step S63, the database unit 90 displays the document on the display unit 12.

On the other hand, in step S65, the access right verification unit 91 obtains information on the member who created the document from the attribute storing unit 91 and the screen generating unit 80 generates a screen displaying, for example, the contact information of the member based on the obtained information. The screen generating unit 80 also adds to the screen a message that the document cannot be displayed because the access is not authorized. In step S66 following step S65, the display unit 12 displays the screen generated in step S65.

Embodiments of the present invention provide a task search apparatus that make it possible to easily retrieve tasks similar to a current or new task from a database containing information regarding previous tasks.

The present invention is not limited to the specifically disclosed embodiments, and variations and modifications may be made without departing from the scope of the present invention.

**Claims**

1. An apparatus for searching a collection of tasks for a similar task similar to a focus task, comprising:

   a topology storing unit configured to store information on a topology of the tasks; and
   a connected task search unit configured to extract similar connected tasks similar to a focus-task-connected task connected to the focus task from similar-task-candidate-connected tasks connected to similar task candidates that are candidates for the similar task.

2. The apparatus as claimed in claim 1, wherein a positional relationship in the topology between the focus task and the focus-task-connected task and a positional relationship in the topology between the similar task candidates and the similar-task-candidate-connected tasks are substantially the same.

3. The apparatus as claimed in claim 1, wherein
   the topology of the tasks has a tree structure; and
   the focus-task-connected task is positioned closer to a root of the topology than the focus task.

4. The apparatus as claimed in claim 1, further comprising:

   an attribute storing unit configured to store attributes of the tasks; and
   an attribute search unit configured to search the tasks for the similar task candidates having attributes that are the same as or similar to an attribute of the focus task.

5. The apparatus as claimed in claim 1, further comprising:

   an output storing unit configured to store outputs of the tasks, wherein the connected task search unit is configured to compare an output of the focus-task-connected task and outputs of the similar-task-candidate-connected tasks.

6. The apparatus as claimed in claim 1, further comprising:

   an attribute storing unit configured to store attributes of the tasks;
   an output storing unit configured to store outputs of the tasks; and
   a similarity degree obtaining unit configured to obtain task similarity degrees, which are degrees of similarity between the focus task and the similar task candidates, based on connected-task similarity degrees, which are degrees of similarity between an output or an attribute of the focus-task-connected task and outputs or attributes of the similar-task-candidate-connected tasks.

7. The apparatus as claimed in claim 6, wherein the similarity degree obtaining unit is configured to obtain the task similarity degrees based on the connected-task similarity degrees taking into account a distance in the topology between the focus task and the focus-task-connected task.

8. The apparatus as claimed in claim 6, further comprising:

a similarity degree display screen generating unit configured to generate a screen displaying the similar task together with a corresponding one of the connected-task similarity degrees.

9. The apparatus as claimed in claim 8, wherein, when multiple similar tasks are found, the similarity degree display screen generating unit generates the screen such that the similar tasks are displayed in an order of the task similarity degrees or the connected-task similarity degrees.

10. A method of searching a collection of tasks for a similar task similar to a focus task, comprising:

a topology storing step of storing information on a topology of the tasks; and
a connected task search step of extracting similar connected tasks similar to a focus-task-connected task connected to the focus task from similar-task-candidate-connected tasks connected to similar task candidates that are candidates for the similar task.

11. The method as claimed in claim 10, wherein a positional relationship in the topology between the focus task and the focus-task-connected task and a positional relationship in the topology between the similar task candidates and the similar-task-candidate-connected tasks are substantially the same.

12. The method as claimed in claim 10, wherein
the topology of the tasks has a tree structure; and
the focus-task-connected task is positioned closer to a root of the topology than the focus task.

13. The method as claimed in claim 10, further comprising:

an attribute storing step of storing attributes of the tasks; and
an attribute search step of searching the tasks for the similar task candidates having attributes that are the same as or similar to an attribute of the focus task.

14. The method as claimed in claim 10, further comprising:

an output storing step of storing outputs of the tasks, wherein, in the connected task search step, an output of the focus-task-connected task and outputs of the similar-task-candidate-connected tasks are compared.

15. The method as claimed in claim 10, further comprising:

an attribute storing step of storing attributes of the tasks;
an output storing step of storing outputs of the tasks; and
a similarity degree obtaining step of obtaining task similarity degrees, which are degrees of similarity between the focus task and the similar task candidates, based on connected-task similarity degrees, which are degrees of similarity between an output or an attribute of the focus-task-connected task and outputs or attributes of the similar-task-candidate-connected tasks.

16. The method as claimed in claim 15, wherein, in the similarity degree obtaining step, the task similarity degrees are obtained based on the connected-task similarity degrees taking into account a distance in the topology between the focus task and the focus-task-connected task.

17. The method as claimed in claim 15, further comprising:

a similarity degree display screen generating step of generating a screen displaying the similar task together with a corresponding one of the connected-task similarity degrees.

18. The method as claimed in claim 17, wherein, when multiple similar tasks are found, the screen is generated in the similarity degree display screen generating step such that the similar tasks are displayed in an order of the task similarity degrees or the connected-task similarity degrees.

19. A storage medium having program code embodied therein for causing a computer to perform the method as claimed in any one of claims 10 through 18.

# FIG.1

EP 1 898 348 A1

## FIG.2A

| TOP TASK ID | PARENT TASK ID | TASK ID | OBJECTIVE ID |
|---|---|---|---|
| BDF-1 | - | BDF-1 | 1 |
| BDF-1 | BDF-1 | BDF-2 | 3 |
| BDF-12 | BDF-15 | BDF-23 | 10 |

## FIG.2B

| OBJECTIVE ID | OBJECTIVE |
|---|---|
| 1 | PROJECT MANAGEMENT |
| 2 | PROJECT PROPOSAL |
| 3 | DAILY WORK REVIEW |
| 4 | INTERVIEW |

## FIG.2C

| OUTPUT TYPE ID | OUTPUT TYPE |
|---|---|
| 1 | REQUIREMENT SPECIFICATION |
| 2 | FUNCTIONAL SPECIFICATION |
| 3 | BUDGET PLANNING DOCUMENT |
| 4 | PRESENTATION MATERIAL |

## FIG.2D

| OUTPUT ID | TASK ID | OUTPUT TYPE ID | NAME |
|---|---|---|---|
| 1 | BDF-1 | 1 | requirement_specifications.doc |
| 2 | BDF-1 | 4 | presentation_slides.ppt |
| 3 | BDF-1 | 10 | completed_task_report.doc |
| 4 | BDF-24 | 20 | Interview Transcript |

# FIG.3

| RECENT TASKS | TASK TREE | REFERENCE INFORMATION |
|---|---|---|

**RECENT TASKS** (1)

- Patent Document Preparation
- Research on Competing Products
- Minutes of Meeting

**TASK TREE** (2)

4

- Preparation of Requirement Specifications
  - Outlining Vision
    - Hearing From Manager
    - Research on Competing Products

**REFERENCE INFORMATION** (3)

DUE DATE: 3/30

2/15 We conducted a survey on the business application software market. The overall growth rate of this market is high. The business application software market can be roughly divided into two areas. ⋯ See xxx.txt for details.

OUTPUTS

general_information.txt

DISPLAY SIMILAR TASK | EDIT | INPUT

EP 1 898 348 A1

EP 1 898 348 A1

| 10 UI UNIT | 20 CRITERIA SETTING UNIT | 30 DISPLAY REQUEST RECEIVING UNIT | 40 TASK ANALYSIS UNIT | 50 TASK MANAGEMENT UNIT | 60 MEMBER MANAGEMENT UNIT | 70 REFERENCE/ CREATED DOCUMENT MANAGEMENT UNIT | 80 SCREEN GENERATING UNIT |

SEARCH CRITERIA SETTING REQUEST S101

S102

SCREEN DISPLAY REQUEST S200

TASK ANALYSIS REQUEST S210

REQUEST FOR TOPOLOGICAL INFORMATION AND ATTRIBUTES

S211 S212

REQUEST FOR MEMBER INFORMATION

S214 S213

REQUEST FOR INFORMATION ON OUTPUT/REFERENCE DOCUMENT S215

S216

SEARCH S217

REQUEST TO DISPLAY OUTPUT S220

S221

REQUEST TO DISPLAY REFERENCE/CREATED DOCUMENT S230

S231

REQUEST TO GENERATE SCREEN S240

S241

S250

REQUEST TO DISPLAY DOCUMENT S300

REQUEST FOR CONTACT INFORMATION

S301

S310 S302

FIG.4

# FIG.5

START

SET CURRENT TASK
AS FOCUS TASK
S21

EXTRACT TASKS HAVING OBJECTIVE IDs
THAT ARE THE SAME AS OR SIMILAR TO
OBJECTIVE ID OF FOCUS TASK
S22

EXTRACT SIMILAR TASK
CANDIDATES WHOSE
MEMBERS AND ROLES OF
MEMBERS ARE SIMILAR TO
THOSE OF FOCUS TASK
S23

NUMBER
OF SIMILAR TASK CANDIDATES
$\geqq 20$
S24

YES

NO

REFINE LIST OF SIMILAR
TASK CANDIDATES
S25

END

# FIG.6

# FIG.7

| TOTAL SIMILARITY DEGREE | TASK ID | TASK NAME | OWN SIMILARITY DEGREE | PARENT TASK SIMILARITY DEGREE |
|---|---|---|---|---|
| 1 | AZX-2 | COMPETING PRODUCTS ANALYSIS REPORT | 85 | 73 |
| 2 | FDS-9 | PREPARATION OF INTERNAL MONTHLY REPORT | 79 | 70 |
| 3 | XCC-14 | LATEST COMPETING PRODUCTS REPORT | 71 | 75 |
| 4 | FES-39 | SUMMARY OF FEATURES OF OWN PRODUCTS | 74 | 68 |
| 5 | XCC-5 | MONTHLY BUSINESS THEME REPORT | 72 | 69 |

| SORT | | SORT |

EP 1 898 348 A1

# FIG.8

| TASK TREE | TITLE: Survey on Competing Products of ··· |
|---|---|

OBJECTIVE: OUTPUT:
Competing Product Feature List
Survey

| 12/10 | Referenced | KM_outline.doc |
|---|---|---|
| 12/17 | Created | Domino_app_development.txt |
| | | |
| | | |
| | | |
| | | |

| 1 | 2 | 3 | 4 |
|---|---|---|---|

# FIG.9

START

↓

GENERATE DIAGRAM REPRESENTING
SPANNING TREE OR SUBTREE
INCLUDING CURRENT TASK TO BE
DISPLAYED BASED ON TREE
STRUCTURE MANAGEMENT TABLE — S41

↓

HIGHLIGHT CURRENT TASK
IN TREE DIAGRAM — S42

↓

GENERATE TEXTS SHOWING
CORRESPONDING TASK
OBJECTIVE AND OUTPUT TYPE — S43

↓

LAY OUT TREE DIAGRAM,
TEXTS, AND REFERENCE
DOCUMENTS OR OUTPUTS
ON SCREEN — S44

↓

END

# FIG.10

START

STORE NAMES AND TYPES OF
REFERENCE DOCUMENTS AND
LINKS TO THEM IN REFERENCE
/CREATED DOCUMENT
MANAGEMENT UNIT — S51

STORE INFORMATION ON CREATED
DOCUMENTS AS OUTPUTS OF
TASK IN REFERENCE/CREATED
DOCUMENT MANAGEMENT UNIT — S52

IF INFORMATION ON THE
CREATED DOCUMENTS IS
PRESENT AS REFERENCE
DOCUMENT INFORMATION,
REMOVE THE REFERENCE
DOCUMENT INFORMATION — S53

RECEIVE AND STORE
INFORMATION ON ACCESS
RIGHTS TO THE DOCUMENTS
STORED IN STEP S52 — S54

END

# FIG.11

```
START
  │
  ▼
┌─────────────────────────┐
│  RECEIVE REQUEST TO     │  S61
│  DISPLAY DOCUMENT       │
└─────────────────────────┘
  │
  ▼
┌─────────────────────────┐
│  OBTAIN ACCESS RIGHT    │  S62
│  INFORMATION ON         │
│  REQUESTED DOCUMENT     │
└─────────────────────────┘
  │
  ▼
      S63
  ╱─────────╲          NO
 ╱   DOES    ╲ ──────────────┐
╲ USER HAVE   ╱               │
 ╲ ACCESS    ╱                │
  ╲ RIGHT?  ╱                 ▼
   ╲───────╱            ┌──────────────────────────────┐
   YES                  │ OBTAIN CONTACT INFORMATION   │  S65
    │                   │ OF MEMBER WHO CREATED THE    │
    │      S64          │ DOCUMENT FROM ATTRIBUTE      │
    ▼                   │ STORING UNIT                 │
┌──────────────────┐    └──────────────────────────────┘
│ DISPLAY REQUESTED│                │
│ DOCUMENT ON      │                ▼        S66
│ DISPLAY UNIT     │    ┌──────────────────────────────┐
└──────────────────┘    │ DISPLAY SCREEN SHOWING       │
    │                   │ UNAUTHORIZED-ACCESS MESSAGE  │
    │                   │ AND CONTACT INFORMATION      │
    │                   └──────────────────────────────┘
    │                                │
    │◄───────────────────────────────┘
    ▼
   END
```

**European Patent Office**

**DECLARATION**

which under Rule 45 of the European Patent Convention shall be considered, for the purposes of subsequent proceedings, as the European search report

Application Number

EP 07 11 3697

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>G06Q10/00 |

The claims of the application are considered to relate to subject matter excluded from patentability under Art. 52(2) and (3) EPC and formulated to merely specify commonplace features relating to a technological implementation of such matter to such an extent that a meaningful search is not possible. The examiner could not determine any technical solution defined in response to a problem within the content of the application as originally filed. Any problems which are addressed do not appear to require a technical, but rather an administrative or organisational, i.e. business, solution. Whilst the implementation of such solutions may include the use of generic technical features these merely serve their well known functions as would be recognised by the skilled person in the technical field under consideration.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| The Hague | 5 November 2007 | Bassanini, Anna |

EPO FORM 1504 (P04C37)

**EP 1 898 348 A1**

## REFERENCES CITED IN THE DESCRIPTION

### Patent documents cited in the description

- JP 2002207726 A